## Europäisches Patentamt
## European Patent Office
## Office européen des brevets

(11) Veröffentlichungsnummer: **0 220 488 B1**

(12) **EUROPÄISCHE PATENTSCHRIFT**

(45) Veröffentlichungstag der Patentschrift: **24.06.92**

(21) Anmeldenummer: **86113033.4**

(22) Anmeldetag: **22.09.86**

(51) Int. Cl.⁵: **C01B 33/26**

(54) Verfahren zur Herstellung einer Impfmischung für die Faujasit-Synthese.

(30) Priorität: **29.10.85 DE 3538416**

(43) Veröffentlichungstag der Anmeldung:
**06.05.87 Patentblatt  87/19**

(45) Bekanntmachung des Hinweises auf die
Patenterteilung:
**24.06.92 Patentblatt  92/26**

(84) Benannte Vertragsstaaten:
**BE DE FR GB NL SE**

(56) Entgegenhaltungen:
**EP-A- 0 126 204**
**DE-A- 2 703 264**
**US-A- 3 433 589**
**US-A- 3 671 191**
**US-A- 4 228 137**

(73) Patentinhaber: **Degussa Aktiengesellschaft**
**Weissfrauenstrasse 9**
**W-6000 Frankturt am Main 1(DE)**

(72) Erfinder: **Kleinschmit, Peter, Dr.**
**Wildaustrasse 19**
**W-6450 Hanau 9(DE)**
Erfinder: **Kriechbaum, Gangolf, Dr.**
**Wilhelm-Busch-Strasse 3**
**W-6643 Freigericht 1(DE)**
Erfinder: **Strack, Hans, Dr.**
**Riemenschneiderstrasse 1**
**W-8755 Alzenau(DE)**

**Beschreibung**

Faujasit ist ein synthetisches Natriumalumosilikat mit einem dreidimensionalen Netzwerk von Kanälen und Hohlräumen. Aufgrund seiner chemischen Zusammensetzung und Struktur sowie Temperaturbeständigkeit und Modifizierbarkeit, besitzt Faujasit außergewöhnliche katalytische Eigenschaften, die die Verwendung in beispielsweise Crackkatalysatoren ermöglicht.

Bei dem Einsatz in Crackkatalysatoren spielen röntgenographische Phasenreinheit, Kristallinitätgrad, $SiO_2/Al_2O_3$-Verhältnis und Adsorptionseigenschaften eine zentrale Rolle. (DE-AS 12 03 239, DE-PS 10 98 929, DE-PS 10 38 016).

Es ist bekannt, Impfmischungen für die Faujasitsynthese aus Wasser, Alkalimetallhydroxid, Siliciumdioxid und Aluminiumoxid herzustellen, indem man Natriumsilikat und Natriumaluminat miteinander vermischt. (DE-PS 19 30 705, US-PS 4 228 137, US-PS 34 33 589).

Die Herstellung dieser Impfmischung setzt eine exakte Dosierung der Komponenten voraus. Gemäß Beispiel 1 der DE-PS 19 30 705 beträgt das Verhältnis der Komponenten $Na_2O : Al_2O_3 : SiO_2 : H_2O = 15 : 1 : 15 : 165$. Nachteiligerweise führen schon geringe Abweichungen hiervon zu Fehlkristallisationen. Außerdem geliert diese an sich pumpfähige Mischung gelegentlich zu einer kompakten Masse, die nur unter Verlust der Impfeigenschaften wieder in den pumpfähigen Zustand überführt werden kann.

Aus der US-PS 4 228 137 sind Impfmischungen der Zusammensetzung ($Na_2O : Al_2O_3 : SiO_2 : H_2O = 11 : 1 : 11,3 : 240$) bekannt, die aus calcinierten Tonerden hergestellt werden. Nachteilig hierbei ist, daß nur spezielle Tonerdensorten nach der Calcinierung Impfeigenschaften besitzen, und als Naturprodukt in ihrer chemischen Zusammensetzung stets Schwankungen unterworfen sind. Verunreinigungen mit Fremdionen können sich ebenfalls nachteilig auf die Impfeigenschaften auswirken.

Aus der DE-OS 21 45 800 ist ein Verfahren zur Herstellung von Keimzentren, bei welchem Natriumaluminatlauge vorgelegt und Natriumsilikatlösung hinzugegeben wird, bekannt. Dies Gemisch wird 24 Stunden bei Zimmertemperatur gealtert.

Das bekannte Verfahren hat den Nachteil, daß aufgrund des unterschiedlichen Gehaltes der Aluminatlauge ein erhöhter analytischer Aufwand und Dosierungsprobleme bestehen.

Dosierungsprobleme entstehen vor allem dadurch, daß für die Einstellung eine definierten $SiO_2/Al_2O_3$-Verhältnisses mit engen Toleranzgrenzen zu einer großen Menge an Natriumsilikat in der Lösung eine kleine Menge an $Al_2O_3$ in der Aluminatlauge hinzugegeben werden muß.

Aus der DE-PS 33 11 339 ist ein Verfahren zur Herstellung einer Impfmischung für die Faujasit-Synthese bekannt, bei welchem man amorphes, synthetisches Natriumaluminiumsilikat mit einer $Na_2O$-liefernden Verbindung umsetzt.

Aufgabe der Erfindung ist es, ein Verfahren zur Herstellung einer Impfmischung für die Faujasit-Synthese zu schaffen, die wirtschaftlich und gut reproduzierbar in engen Tolerenzgrenzen hergestellt werden kann.

Gegenstand der Erfindung ist ein Verfahren zur Herstellung einer Impfmischung für die Faujasit-Synthese, welches dadurch gekennzeichnet ist, daß man unter Rühren wässrige Natronlauge mit Wasser verdünnt und auf eine Temperatur von 50 bis 80°C erhitzt, Fällungskieselsäure hinzufügt, diese Mischung auf eine Temperatur von 30 bis 70°C abkühlt, wässrige Natriumaluminatlauge und anschliessend weiteres Wasser derart hinzufügt, daß man eine Mischung mit der Zusammensetzung $12 \pm 3$ $Na_2O : Al_2O_3 : 12 \pm 3$ $SiO_2 : 200 \pm 60$ $H_2O$ erhält und anschliessend diese Mischung bei $35 \pm 5$°C 18-72 Std. altert.

Als optimaler Bereich für die Zusammensetzung einer Impfmischung hat sich $Na_2O : Al_2O_3 : SiO_2 : H_2O = (11.5 - 13.5) : 1 : (11.5 - 13.5) : 200$ ($Na_2O = SiO_2$) erwiesen. Bei einer Alterungstemperatur von $35 \pm 5$°C verfügen diese Impfmischungen bereits nach etwa 18 - 30 h über genügend Aktivität, um eine Kristallisation von Na-Y-Zeolith in max. 24 h sicherzustellen.

Für die erfindungsgemässen Impfmischungen, die aus Fällungskieselsäure Natriumaluminatlauge und Natronlauge hergestellt wurden, hat sich eine Lagertemperatur von 35°C als vorteilhaft herausgestellt.

Die erfindungsgemäßen Impfmischungen neigen nach einer gewissen Zeit zur Gelierung. Sie bleiben dennoch problemlos handhabbar, wenn sie in einem Rührbehälter gelagert werden. Ein Nachlassen der Impfaktivität konte auch nach mehreren Monaten nicht beobachtet werden.

Die eingesetzte Natronlauge kann die folgende Zusammensetzung haben:

300 - 600 $Na_2O$/l

Die eingesetzte Natriumaluminatlauge kann die folgende Zusammensetzung haben:

$Al_2O_3 = 100 - 200$ g/l

2

$Na_2O = 150 - 300$ g/l

Die Fällungskieselsäure kann als Pulver und/oder als Filterkuchen eingesetzt werden.

Das erfindungsgemäße Verfahren zeigt die folgenden Vorteile:

Die als Ausgangsverbindung eingesetzte synthetische, amorphe Fällungskieselsäuren stehen stets in ausreichender Reinheit und in praktisch nicht begrenzten Mengen zur Verfügung.

Bei der Herstellung der erfindungsgemäßen Impfmischung liegt die Komponente $SiO_2$ in der Fällungs-kieselsäure in einem festen stöchiometrischen Verhältnis vor. Dosierfehler können ausgeschlossen werden, da für die Einstellung der Molverhältnisse vorzugsweise nur verdünnte Natronlauge, Wasser und Natriumaluminatlauge benötigt werden.

Die erfindungsgemäß hergestellten Impfmischungen zeigen überraschenderweise kaum Tendenz zum Gelieren. Sie können auch nach Monaten, z.B. bis zu einem Jahr ohne erkennbare Veränderungen zur Faujasit-Synthese verwendet werden.

Mit der erfindungsgemäßen Impfmischung kann man Faujasite des Typs Y und des Typs X herstellen, wobei man bekannte Ausgangsstoffe sowie bekannte Reaktionsmischungen verwenden kann.

Insbesondere können Reaktionsbedingungen gewählt werden, wie sie in der DE-PS 10 38 016, DE-PS 10 98 929 und der DE-AS 12 03 239 beschrieben werden. Die Impfmischung kann dabei in Mengen von 0,5 bis 10 Vol.-%, vorzugsweise 2 bis 3 Vol.-%, bezogen auf die Synthesemischung, zugesetzt werden.

Beispiel 1

Die erfindungsgemässen Imfpmischungen werden nach folgender Vorschrift hergestellt:

306 ml Natronlauge (50 %) und 298 ml Wasser (50 % der benötigten Wassermenge) wurden vorgelegt und auf $T_1$ erwärmt. Nach Zufügen von Fällungskieselsäure läßt man auf $T_2$ abkühlen und addiert über einen Tropftrichter 107.0 ml Natriumaluminatlauge (313 g $Na_2O$/l, 262.4 g $Al_2O_3$/l) und die restliche Wassermenge. Die erhaltene Mischung haben die Zusammensetzung $Na_2O : Al_2O_3 : SiO_2 : H_2O = 12,5 : 1 : 12,5 : 200$.

Die eingesetzte Fällungskieselsäure hat die folgenden physikalisch-chemischen Kenndaten:

| Oberfläche nach BET [1] | | $m^2/g$ | 170 |
|---|---|---|---|
| Mittlere Größe der Primärteilchen | | nm | 18 |
| Stampfdichte [2] | | g/l | 240 |
| pH-Wert [3] | | | 6,3 |
| Siebrückstand nach Mocker 45 µm) [4] | % | | 0,2 |
| Trocknungsverlust ( 2h, 105°C) [5] | % | | 6 |
| Glühverlust ( 2h, 1000°C) [5][6] | % | | 5 |
| $SiO_2$ [7] | % | | 98 |
| $Na_2O$ [7] | % | | 1 |
| $Fe_2O_3$ [7] | % | | 0,03 |
| $SO_3$ [7] | % | | 0,8 |

[1] nach DIN 66 131

[2] nach DIN 53 194 (nicht gesiebt), ISO 787/XI oder JIS K 5101/18

[3] nach DIN 53 200 (in 5 %iger wässriger Dispersion) ISO 787/XI, ASTM D 1208 oder JIS K 5101/24

[4] nach DIN 53 580, ISO 787/XVII oder JIS K 5101/20

[5] nach DIN 55 921, ASTM D 1208 oder JIS K 5101/23

[6] bezogen auf die 2 Stunden bei 105°C getrocknete Substanz

[7] bezogen auf die 2 Stunden bei 1000°C geglühte Substanz

pH-Wert (nach DIN 53 200)

Der pH-Wert wird elektrometrisch mit einer Glaselektrode und ein pH-Meter ermittelt. der pH-Wert von Kieselsäuren liegt im allgemeinen im neutralen, der von Silikaten im schwach alkalischen Bereich.

Siebrückstand (nach DIN 53 580)

Eine Kennzahl für die Feinteiligkeit ist der Siebrückstand. Zur Erfassung der in kleinsten Mengen in Fällungskieselsäuren und Silikaten vorkommenden Anteile nicht oder schwerdispergierbare Anteile wird der Siebrückstand nach Mocker bestimmt. Bei diesem Verfahren wird eine Kieselsäuresuspension mit 4 bar Wasserdruck durch das Sieb gespült. Das Sieb wird anschliessend getrocknet und der Siebrückstand gewonnen. Zur Anwendung kommen 45 Micrometer-Siebe, die 325 mesh (nach ASTM) entsprechen.

Oberfläche nach BET (DIN 66 131)

Die Oberfläche von Kieselsäuren und Silikaten wird nach der BET-Methode in $m^2/g$ gemessen. Das Verfahren beruht auf der Adsorption von gasförmigem Stickstoff bei der Temperatur des flüssigen Stickstoffes. Die Areameter-Methode nach Haul und Dümbgen kann vorteilhaft angewandt werden. Eine Eichung ist erforderlich. Es wird sowohl die "innere" als auch die "äussere" Oberfläche erfaßt.

Mittlere Größe der Primärteilchen

Die mittlere Größe der Primärteilchen läßt sich über elektronenmikroskopische Aufnahmen bestimmen. Hierzu werden die Durchmesser von ca. 3.000 - 5.000 Teilchen bestimmt, deren arithmetisches Mittel errechnet wird. Die einzelnen Primärteilchen liegen im allgemeinen nicht isoliert vor, sondern sind zu Aggregaten und Agglomeraten vereinigt. Die "Agglomerat"-Teilchengröße von Fällungskieselsäuren und Silikaten hängt von dem Vermahlungsprozeß ab.

Stampfdichte (nach DIN 53 194)

Es handelt sich um eine Maßangabe für das Gewicht des pulverförmigen Produktes. Ca. 200 ml Kieselsäure werden in dem Meßzylinder des Stampfvolumeters 1.250 ml gestampft. Aus der Einwaage und dem Volumen wird die Stampfdichte berechnet und in g/l angegeben.

Trocknungsverlust (nach DIN 55 921)

Die Fällungsprodukte enthalten einen kleinen Anteil physikalisch gebundenen Wassers. Nach 2 Stunden Trocknung im Trockenschrank bei 105°C ist die Hauptmenge des physikalisch gebundenen Wassers entfernt.

Glühverlust (nach DIN 55 921)

Nach 2 Stunden Glühzeit bei 1000°C ist auch das chemisch, in Form von Silanolgruppen gebundene, Wasser entfernt. Der Glühverlust wird an der 2 h bei 105°C getrockneten Substanz bestimmt.

Die einzelnen Versuchsbedingungen sind in der folgenden Tabelle I ausgeführt:

Tabelle I

| Impfmischungen auf der Basis Fällungskieselsäure, Na-aluminat, Natronlauge | | | | |
|---|---|---|---|---|
| Zusammensetzung $Na_2O : Al_2O_3 : SiO_2 : H_2O = 12.5 : 1:12.5:200$, Kristallisationstemperatur 98°C der Impfmischungen zur Herstellung der Zeolithe | | | | |
| Bsp. Nr. | $T_1/T_2$ | Kristallisationszeit h | Alter der Impfmischung d (Tag) | Cyclohexanabsorbtion des hergestellten Zeoliths |
| 1 | 60/60 | 20 | 3 | 21.8 |
| 2 | 60/40 | 20 | 3 | 22.3 |
| **3 | 60/20 | amorph (20 h) | 3 | - |
| 4 | 60/60 | 17 | 5 | 24.1 |
| 5 | 60/40 | 17 | 5 | 21.7 |
| 6 | 70/60 | 16 | 3 | 22.4 |
| 7 | 70/40 | 16 | 3 | 21.3 |
| 8 | 70/60 | 22 | 18 h | 21.3 |
| 9 | 70/40 | 22 | 18 h | 21.4 |
| * | | | | |
| **10 | 60/60 | 22 | 24 h | - |

\* Bei Zubereitung der Impfmischung wurden 100 % der Wassermenge vorgelegt.
\*\* Vergleichsbeispiele

Beispiel 2

Mit der erfindungsgemäßen Impfmischung gemäß Beispiel 1/8 wird Zeolith Y hergestellt; dabei werden die folgenden Rohstoffe eingesetzt:

$$\text{Natronlauge 50 \% } Na_2O \quad = \quad 593 \text{ g/l}$$
$$\rho = 1.53 \text{ g/ml}$$
$$\text{Aluminatlauge} \quad \rho = 1.365 \text{ g/ml}$$
$$Al_2O_3 = 179,4 \text{ g/l}$$
$$Na_2O = 233.9 \text{ g/l}$$

Fällungskieselsäure, wie
in Beispiel 1 mit
etwas höherem
Feuchtigkeitsgehalt $\quad SiO_2 \quad = \quad 91.2 \text{ \%}$

In einem 1-l-Quickfitkolben (Rückflußkühler, Innenthermometer, Teflon-Halbmondrührer, Tropftrichter) werden 753 ml $H_2O$ und 48.9 ml Natronlauge (50 %) vorgelegt (Mischtemperatur ca. 40°C). Dazu gibt man innerhalb von 5 min portionsweise 254 g Fällungskieselsäure (mit 91 % $SiO_2$, Rest Wasser) und rührt bis ein homogenes Gemisch entstanden ist (ca. 10 min.) Über einen Tropftrichter addiert man anschließend innerhalb von 20 min 180.7 ml Alulauge (kräftiges Rühren). Nach Hinzufügen von 20 ml Impfmischung erhitzt man auf 98°C. Die Synthesemischung hat eine Zusammensetzung von : $Na_2O : Al_2O_3 : SiO_2 : H_2O$ = 3.4 : 1 : 95 : 140. Nach Beendigung der Kristallisation (ca. 16 - 24 h) wird der Ansatz über eine Nutsche filtriert und mit Wasser gewaschen (Waschwasser pH 10), der Filterkuchen wird im Trockenschrank bei 110°C getrocknet.

Eigenschaften: Zellkonstante: 24.62 - 24.65 Å
Cyclohexanadsorbtion: 22 ± 2 %
(20°C, p/po = 0.8)

typ. chemische Analyse:

$$Na_2O \qquad 10.7 \text{ \%}$$
$$Al_2O_3 \qquad 16.56 \text{ \%}$$
$$SiO_2 \qquad 49.25 \text{ \%}$$
$$H_2O \qquad 21.7 \text{ \%}$$
$$SiO_2/Al_2O_3 \qquad 5.06$$
$$Na_2O/Al_2O_3 \qquad 1.06$$

**Patentansprüche**

1. Verfahren zur Herstellung einer Impfmischung für die Faujasitsynthese, dadurch gekennzeichnet, daß man unter Rühren wässrige Natronlauge mit Wasser verdünnt und auf eine Temperatur von 50 bis 80°C erhitzt, Fällungskieselsäure hinzufügt, diese Mischung auf eine Temperatur von 30 bis 70°C abkühlt, wässrige Natriumaluminatlauge und anschließend weiteres Wasser derart hinzufügt, daß man eine Mischung mit der Zusammensetzung 12 ± 3 $Na_2O:Al_2O_3$: 12 ± 3 $SiO_2$ : 200 ± 60 $H_2O$ erhält und anschliessend diese Mischung bei 35 ± 5 °C 18-72 Stdn. altert.

**Claims**

1. A process for the preparation of an inoculation mixture for Faujasite synthesis, characterised in that aqueous sodium hydroxide solution is diluted with water with stirring and heated to a temperature of from 50 to 80°C, precipitated silica is added, the resulting mixture is cooled to a temperature of from 30 to 70°C, aqueous sodium aluminate liquor followed by a further quantity of water is added to produce a mixture having the composition: $12 \pm 3$ $Na_2O$:$Al_2O_3$:$12 \pm 3$ $SiO_2$ : $200 \pm 60$ $H_2O$, and this mixture is subsequently aged at $35 \pm 5$°C for 18-72 hours.

**Revendications**

1. Procédé pour la préparation d'un mélange de germination pour la synthèse de la faujasite, caractérisé en ce que l'on dilue avec de l'eau une solution aqueuse d'hydroxyde de sodium, sous agitation, et on la chauffe à une température de 50 à 80°C, on y ajoute un acide silicique précipité, on refroidit ce mélange jusqu'à une température de 30 à 70°C, on y ajoute une solution aqueuse d'aluminate de sodium et ensuite une nouvelle quantité d'eau, de manière à obtenir un mélange ayant la composition $12 \pm 3$ $Na_2O$ : $Al_2O_3$ : $12 \pm 3$ $SiO_2$ : $200 \pm 60$ $H_2O$ et on fait ensuite vieillir ce mélange pendant 12-72 heures à $35 \pm 5$°C.